Europäisches Patentamt

European Patent Office

Office européen des brevets

(19)

(11) **EP 1 089 452 A1**

(12) **EUROPEAN PATENT APPLICATION**

(43) Date of publication:
**04.04.2001 Bulletin 2001/14**

(51) Int Cl.$^7$: **H04B 1/707**

(21) Application number: **99307636.3**

(22) Date of filing: **28.09.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Freiberg, Lorenze Fred**
**Swindon Wiltshire SN5 6HG (GB)**

• **Sabel, Lesley Phillip**
**Swindon, Wiltshire SN1 3AE (GB)**
• **Wood, Steven Andrew**
**Rownham Mead, Hotwells BS8 4YE (GB)**

(74) Representative: **Williams, David John et al**
**Lucent Technologies UK Limited,**
**5 Mornington Road**
**Woodford Green, Essex IG8 0TU (GB)**

(54) **Fractional sample timing error estimation for W-CDMA**

(57)     There is disclosed a method of estimating the timing error of a received signal in a spread spectrum communication system comprising: cross-correlating a portion of the received signal with a known sequence thereby generating a sampled cross-correlation function; determining the sample having the highest value of the sampled cross-correlation function; and estimating the timing position of the actual peak of the cross-correlation function based on the sample point peak value of the sampled cross-correlation function and the values of the cross-correlation function at sample points before and after the sample generating the peak value.

FIGURE 3

## Description

## Field of the Invention

The present invention relates to a technique for estimating the fractional sample timing error in the receiver of a communication system utilising spread-spectrum techniques, and particularly but not exclusively to such a technique utilised in a wide-band code division multiple access system (W-CDMA).

## Background to the Invention

Sampled data W-CDMA receivers sample the incoming signal stream from the antenna, after pre-processing such as amplification and down conversion, at an over-sampling rate equal to a multiple of the nominal chip rate. If this over-sampling rate is L, then L samples per chip are made. In order to de-spread the signal every Lth sample is taken and correlated with a locally generated spreading sequence that corresponds to the known spreading sequence associated with the symbol to be received. In conventional receivers, a tracking feedback loop is employed that continuously monitors the timing error between the locally generated spreading sequence and the spreading sequence of the received signals. The feedback loop adjusts the local spreading sequence generator fine timing to maximise the correlation value and hence maximise the signal to noise ratio of the de-spread data. Here fine timing refers to the fractional chip period timing offset between the received signal spreading code and the locally generated spreading code replica. Early-late gate code tracking loops typify this approach. Examples of this are discussed in Chapter 5 of the book "Introduction to Spread Spectrum Communications", Ziemer & Peterson, Prentice-Hall, 1995.

If the over-sampling rate is high enough, i.e. if the value of L is high enough, then the timing correction can be made by advancing or retarding the local code generator by one sample. This technique ensures that the timing accuracy is within ½ of a chip sample, which is equivalent to 1/(2L) of a chip.

On the other hand if the value of L is low, say 4, then the above-described feedback technique will in general provide relatively coarse timing correction. This is because the correlation peak, which represents the optimum sampling point, may be between successive samples. The coarseness will introduce losses in correlation leading to a reduced de-spread data signal-to-noise ratio.

When low over-sampling rates are employed, it is necessary to use some form of interpolation to provide an estimate of the signal at the optimum sampling point, which lies between samples. Therefore, an estimate of the fractional sampling delay is required to drive an interpolator.

A quadratic approximation/interpolation technique has been proposed in "Block Processing Feedforward Symbol Tining Estimator for Digital Modems", L.P. Sabel and W.G. Cowley, Electronic Letters, 4th August 1994, Vol. 30 No. 16, pp 1273-1274. This technique employs a technique for estimating the peak of a correlation function in narrow-band (non-spread) signals.

It is an object of the present invention to provide a technique for more accurately estimating the timing offset of a received spread-spectrum signal, which technique can provide improved results when the over-sampling in the receiver is low.

## Summary of the Invention

According to the invention there is provided a method of estimating the timing error of a received signal in a spread spectrum communication system comprising: cross-correlating a portion of the received signal with a known sequence thereby generating a sampled cross-correlation function; determining the sample having the highest value of the sampled cross-correlation function; and estimating the timing position of the actual peak of the cross-correlation function based on the sample point peak value of the sampled cross-correlation function and the values of the cross-correlation function at sample points before and after the sample generating the peak value.

The timing position of the actual peak may be approximated by fitting a curve to said sample points. The sample points before and after the sample generating the peak value may be those immediately adjacent the peak value. The curve may be a quadratic curve.

The step of estimating the timing position of the actual peak preferably involves applying the formula:

$$t_p = \frac{3R_1 - 4R_2 + R_3}{R_1 - 2R_2 + R_3}$$

where $t_p$ = the estimated timing position of the peak, $R_1$ = the correlation value at one sample less than the peak , $R_2$ = the correlation value adjacent to the peak, and $R_3$ = the correlation value at one sample more than the peak.

The method may further comprise the step of adjusting the timing position of the received signal in dependence on said estimated timing position. The timing errors of a plurality of multi-paths of a received signal may be estimated, and a plurality of timing position adjusted received signals may be provided to a respective plurality of rake fingers, each rake finger being associated with one of the respective plurality of multi-paths.

The cross-correlation function may be averaged for a sequence of received signal portions.

In a non-coherent system, the method may further comprise the step of applying a non-linearity function to the cross-correlation values. In a coherent system, the method may further comprise the step of multiplying the cross-correlation values with a known complex sequence.

The cross-correlating step may comprise generating a continuous cross-correlation function, and sampling the continuous cross-correlation function to generate the sampled cross-correlation function.

According to another aspect of the present invention there is provided a receiver of a spread spectrum communication system, circuitry for estimating the timing error of a received signal, including: cross-correlation circuitry connected to input the received signal and a stored known spreading sequence, and for generating a sampled cross-correlation function; peak detection circuitry, connected to input the sampled cross-correlation function, for determining the sample having the highest correlation value; and timing estimation circuitry, connected to the cross-correlation circuitry and the peak detection circuitry, for estimating the timing position of the actual peak of the cross-correlation function based on the sample point peak value of the sampled cross-correlation function and the values of the cross-correlation function at sample points before and after the sample generating the peak value.

The timing estimation circuitry may estimate the position of the actual peak by fitting a curve to said sample points. The sample points before and after the sample generating the peak value are those immediately adjacent the peak value. The curve is a quadratic curve.

The timing estimation circuitry may apply the formula:

$$t_p = \frac{3R_1 - 4R_2 + R_3}{R_1 - 2R_2 + R_3}$$

where $t_p$ = the estimated timing position of the peak relative to sample location $R_1$, $R_1$ = the correlation value at one sample less than the peak, $R_2$ = the correlation value adjacent to the peak and which has the maximum value, that is $R_2 > R_1$, and $R_2 > R_1$, and $R_3$ = the correlation value at one sample more than the peak.

The circuitry may further comprise timing adjustment circuitry connected to receive the received signal and to adjust the timing position thereof responsive to the estimated timing position of the actual peak.

The benefit of the invention is two-fold. Firstly, the fractional timing corrections are made in a feed-forward manner. In feedback systems, variation of received signal strength corresponds to a variation in the feedback loop parameters which may lead to instability problems. The feed-forward nature of the apparatus eliminates this concern.

Secondly, the apparatus may be used to determine the timing offsets of several multi-paths from a single set of cross-correlation estimates. This eliminates the need for the tracking loops for each multi-path despreader (known as rake fingers in rake demodulator structures) and consequently leads to reduced implementation complexity.

Brief Description of the Drawings

Figure 1 illustrates a rake receiver structure according to the present invention for de-spreading multi-paths in an exemplary W-CDMA system;
Figure 2 illustrates the main elements of the timing error estimation circuitry according to a first preferred embodiment of the present invention;
Figures 3(a) to 3(c) illustrate various stages of the signal processing performed by the fractional timing algorithm implemented in the circuitry of Figure 2;
Figure 4 illustrates an example squared correlation function of a received signal; and
Figure 5 illustrates the main elements of the timing error estimation circuitry according to a second preferred embodiment of the present invention.

Description of Preferred Embodiment

The invention is described herein with reference to an exemplary embodiment. One skilled in the art will appreciate, however, that the invention is not limited to such an embodiment, and variations may apply in different implementations.

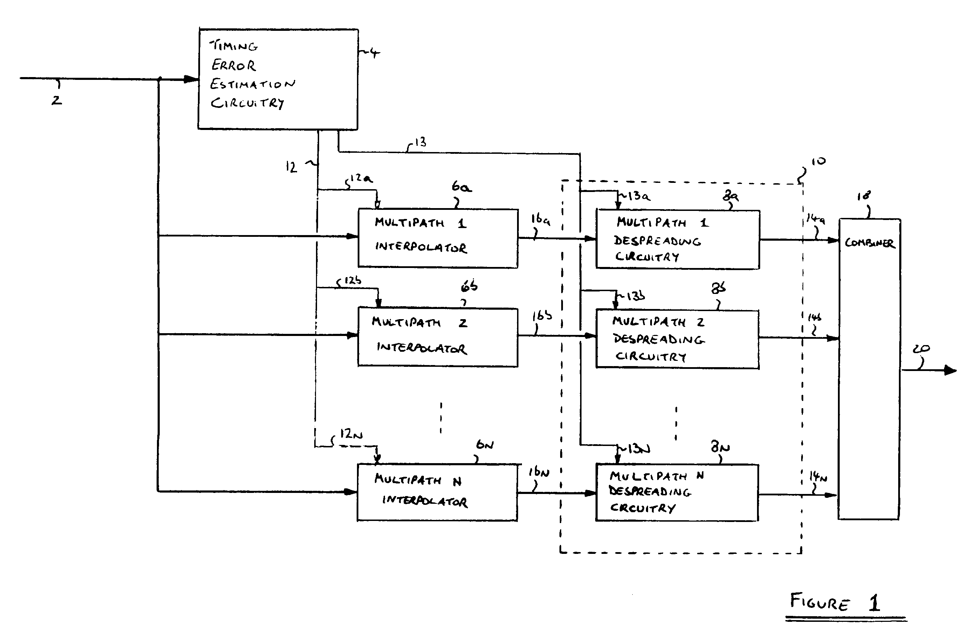

Figure 1 illustrates a portion of a receiver in a spread-spectrum W-CDMA system. The signal on line 2 is provided to the receiver circuitry by a front-end processor of the receiver, which down-converts the received signal from RF to nominal baseband, then converts the nominal baseband analogue signal into digital format by sampling, and chip-matched filters the received signal. The signal on line 2 is thus a sampled, chip-matched filtered version of the wanted signal received at the front-end of the receiver. The rate at which the received signal is sampled is nominally a multiple of the chip rate of the received spread-spectrum signal.

The portion of the receiver circuitry shown in Figure 1 is the circuitry for recovering transmitted symbols. Generally designated by reference numeral 10 is a conventional rake receiver comprising a plurality 8a to $8_N$ of multi-path de-spreading circuits ("rake fingers"). The transmitted signal for a particular caller travels from the transmitter to the receiver in the air interface via a possible plurality of paths. These paths may include a direct path from transmitter to receiver, and also include signals reflected along the path between transmitter and receiver. Each receiver is typically provided with an appropriate number of rake receivers 8a to $8_N$ to be able to decode a sufficient number, N, of multi-paths for a particular caller, to recover a strong replication of the transmitted signal at the receiver.

According to the invention, the conventional rake receiver is further adapted and provided with a timing error estimation circuitry 4 and a plurality of multi-path interpolators 6a to $6_N$, each one of the multi-path interpolators being associated with a respective one of the rake fingers 8a to $8_N$.

The sampled received signal is provided as an input on line 2 to each of the multi-path interpolators 6a to $6_N$, and to the timing error estimation circuitry 4. The timing error estimation circuitry 4 provides an N plurality of outputs on lines 12, one to each of the multi-path interpolators 6a to $6_N$, on a respective signal line 12a to $12_N$. The timing error estimation circuitry 4 also provides an N plurality of outputs on lines 13, one to each of the multi-path de-spreading circuits 8a to $8_N$, on a respective signal line 13a to $13_N$.

As will be described further hereinbelow, the timing error estimation circuitry 4 estimates both fractional and integer timing errors of multi-paths. The plurality of outputs on lines 12 from the timing error estimation circuitry each indicate a fractional timing error of a multi-path (a fractional timing error being less than a chip sample period). The plurality of outputs on lines 13 from the timing error estimation circuitry each indicate an integer chip sample period timing error.

The multi-path de-spreading circuits 8a to $8_N$ each receive as an input the outputs of a respective one of the multi-path interpolators 6a to $6_N$ on lines 16a to $16_N$ respectively. The multi-path de-spreading circuitry 8a to $8_N$ each present on their respective outputs 14a to $14_N$ a de-spread and time-shifted recovered symbol estimate of the transmitted symbol. The recovered symbols on lines 14a to $14_N$ are then combined in the combiner 18 which presents the recovered final symbol on line 20 for further processing in the receiver.

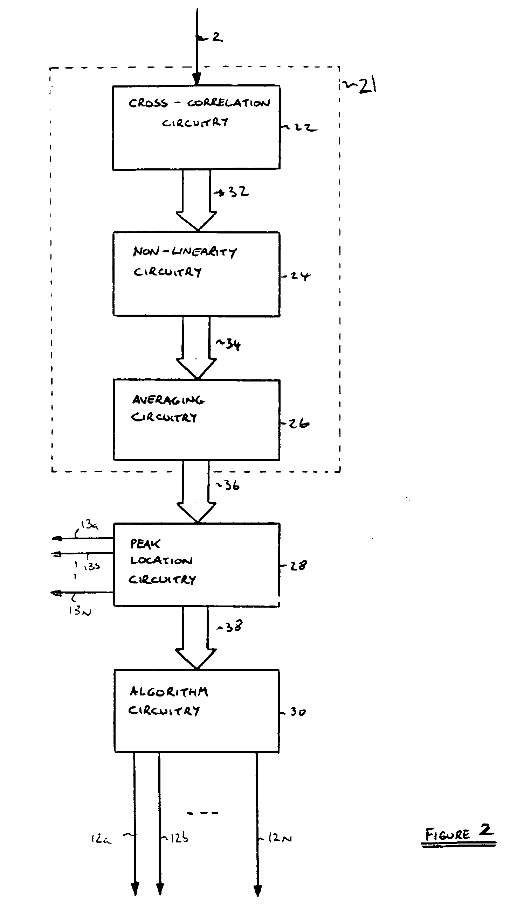

The main functional elements of the timing error estimation circuitry according to the invention are shown in Figure 2, for an example of a non-coherent system. The timing error estimation circuitry comprises cross-correlation circuitry 22, non-linearity circuitry 24, averaging circuitry 26, peak location circuitry 28, and algorithm circuitry 30.

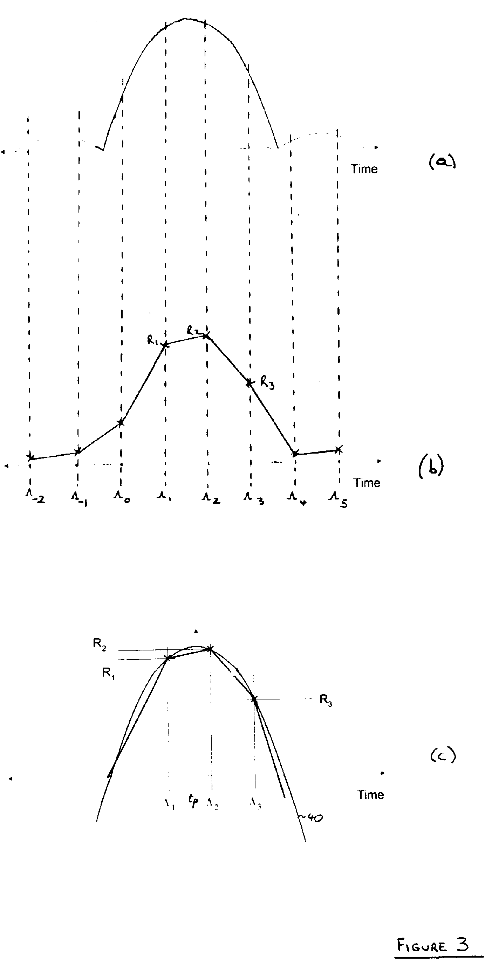

The operation of the circuitry to estimate the error in the timing of the received signal will now be described with reference to Figures 1 and 2 and also with reference to Figure 3, which illustrates the resulting signals at various points in the processing stages of the timing error estimation circuitry 4.

The cross-correlation circuitry 22 receives on signal line 2 a sample of the received signal including the spreading code incorporated in the signal at the transmitter. The cross-correlation circuitry is provided, under local control (not shown) with a locally generated version of the spreading code used in the transmitter. The receiver knows the spreading codes used by the transmitter, and provides the appropriate spreading sequence to the cross-correlation circuitry. Only one spreading code need be provided to the fractional timing circuitry for each user: for a particular caller or user the spreading code is the same for all multi-paths, only shifted in time.

In a conventional manner, the cross-correlation circuitry correlates the spreading code of the received signal with the locally generated spreading code. The estimated timing offset of the received signal is the position where the cross-correlation is a maximum, which is generally not coincident with a cross-correlation sample value.

The thus calculated correlation values are output on lines 32 to the non-linearity circuitry 24. The non-linearity circuitry may implement any one of a number of functions, including a square law or absolute value function. In this example there is described an implementation using a square law device or squaring circuitry. The invention, however, is not limited to such an implementation. Thus, the squaring circuitry squares the values of the correlation function, and outputs the squared values to the averaging circuitry 26 on signal lines 34.

The correlation values are squared in the example of a non-coherent system because the correlation components are complex. By squaring, the sum of the square of the in-phase components and the sum of the square of quadrature components is obtained to give the magnitude of the correlation values.

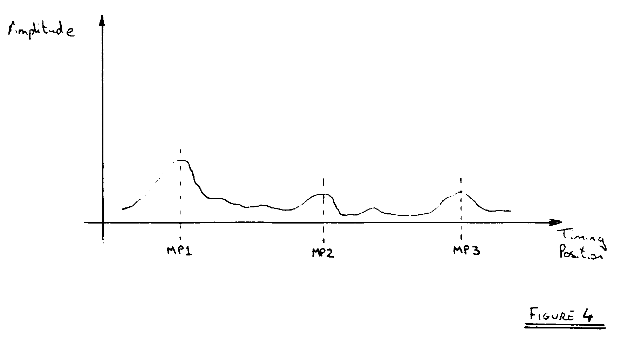

Referring to Figure 4, there is illustrated an example of the squared cross-correlation function which is generated by the cross-correlation circuitry 22, and non-linearity circuitry 24 on line 34. For each received sample the cross-correlation circuitry 22 performs a number of cross-correlations for different estimates of the timing position of the signal. For example, in one preferable implementation the cross-correlation circuitry 22 performs a total of 320 cross-correlations, for 320 estimates of the starting position of the transmitted symbol in the received sample. Thus, for each received sample the cross-correlation circuitry performs a set of 320 cross-correlations.

As can be seen from Figure 4, the generated squared cross-correlation function has a number of peaks, which correspond to the multi-paths associated with a particular transmitted symbol. Thus the peak MP1 corresponds to multi-path 1, the peak MP2 corresponds to multi-path 2, and the peak MP3 corresponds to multi-path 3.

The averaging circuitry 26 averages successive sets of correlation values. For example, for each successive set of received samples the averaging circuitry updates an average correlation function, which gives a representation of the averaged correlation of successive received sets of samples over time.

The averaging circuitry outputs on signal lines 36 the average of the squared correlation functions over time. It will be understood that the cross-correlation circuitry 22, the squaring circuitry 24 and the averaging circuitry 26 may in fact form a single functional block 21, which outputs the averaged square correlation function, where the number of averaged, squared, cross-correlation functions may be varied, to obtain the required timing estimate variance given the received signal-to-noise ratio.

The thus generated averaged squared cross-correlation function has a shape as shown in Figure 3 (a) for one multi-path. It will be appreciated that the averaged squared cross-correlation function also includes the peaks associated with the other multi-paths associated with the function of Figure 4, but only one peak is shown throughout Figure 3 for ease of explanation. The time axis in Figure 3(a), as in Figure 4, does not represent real time. Rather the time axis represents the time relative to an estimated start location, or bit position, of the spreading code of the received signal.

The thus generated averaged squared cross-correlation function on signal lines 36 forms an input to the peak location circuitry 28. The peak location circuitry 28 samples the averaged squared cross-correlation function at a sample rate having an over-sampling factor of L. For coherent detection an over-sampling factor as low as L=2 may be chosen. For this example of a non-coherent system, an over-sampling factor of L=4 is preferably used.

That is the sample rate of the cross-correlation function is L times the nominal chip rate. The optimum sampling position is the peak of the cross-correlation. The peak of the cross-correlation function is the best estimate of where the spreading code is located in the received sample set.

As will be understood by one skilled in the art, the peak location circuitry 28 will detect the peaks to conform with certain criteria. For example, the peak value will be determined as being associated with a multi-path only if it exceeds a certain threshold value, and the peaks of multi-paths have to be a certain distance apart. The implementation of such peak location circuitry for identifying the locations of multi-paths is well-known, and is outside the scope of the present invention. In the example of Figure 4, the cross-correlation circuitry identifies three multi-path locations for a particular transmitted symbol: MP1, MP2, MP3.

The averaged squared cross correlation function of Figure 3(a) is sampled at times $\Lambda_i$. As can be seen in Figure 3(b), this results, when extrapolated, in a function where a peak cross-correlation value can be identified for a particular sample. It can be seen that the peak value occurs at a sample time $\Lambda_2$, and this can be detected by the peak location circuitry in the conventional way by detecting a lower cross-correlation value at the sample times $\Lambda_1$ and $\Lambda_3$ either side of the sample $\Lambda_2$. The cross-correlation value at sample time $\Lambda_1$ is R1, at sample time $\Lambda_2$ is R2, and at sample time $\Lambda_3$ is R3. The estimate of the location of the peak for the multi-path shown in Figure 3, and the other multi-paths of Figure 4, is used by the peak location circuitry to generate timing offset signals associated with each of the multi-paths. These signals are generated on signal lines 13a to $13_N$. Thus the signals on lines 13a to $13_N$ indicate the timing offset to be applied to the respective multi-paths so that each of the code generators in the multi-path de-spreading circuitry 8a to $8_N$ can adjust the position at which the local spreading code is applied for cross-correlation.

Referring to Figures 3(a) and 3(b) it can be clearly seen that the sample time $\Lambda_2$ is in fact to the right of where the actual peak of the averaged squared cross-correlation function is. Clearly, the optimum sampling position lies between the sample times $\Lambda_1$ and $\Lambda_2$. It is assumed that this 'coarse' timing acquisition positions the multi-path peaks to within half a chip period of the actual peak.

To achieve the best fractional timing error correction, it is necessary to make a good estimation of the time difference between the time of the actual peak of the cross-correlation function as designated by time $t_p$ in Figure 3(c), and the time $\Lambda_2$.

For systems where a high over-sampling rate is used the location of the sample $\Lambda_2$ will approximate more closely the actual peak. Where a low over-sampling rate is used, the difference between the timing position of the actual peak and the timing of the sample $\Lambda_2$ may introduce a timing error which significantly degrades system performance.

To overcome this error in the estimate of the location of the peak of the cross-correlation function in this preferred embodiment, the peak location detector circuitry outputs the peak values R1, R2 and R3 on lines 38 to an algorithm circuitry 30. The object of the algorithm circuitry 30 is to estimate the position of the peak to a fraction of a sample. The algorithm circuitry assumes that the three values R1, R2 and R3 are points on an underlying smooth curve, i.e. the algorithm circuitry works by assuming that the three points, taken at times $\Lambda_1$, $\Lambda_2$ and $\Lambda_3$, are samples of a smoother underlying curve.

Thus the algorithm circuitry 30 fits a polynomial to these three points. In a preferred embodiment, a parabola can be calculated which fits the points exactly without recourse to minimum mean squared error techniques. The parabola is shown in Figure 3(c), and is generally designated by reference numeral 40.

The parabola joining the three points R1, R2, and R3 can be defined by the general equation $at^2 + bt + c = R$, where $t$ is the sample time and $R$ is the averaged squared cross correlation output, i.e. a particular value of the averaged squared cross-correlation function at the particular sample time. Given the received cross-correlation values $R_i$, where in this case $i=\{1,2,3\}$, it is possible to form the following simultaneous equations:

$$a\Lambda_1^2 + b\Lambda_1 + c = R_1$$

$$a\Lambda_2^2 + b\Lambda_2 + c = R_2$$

$$a\Lambda_3^2 + b\Lambda_3 + c = R_3$$

Inserting the values 0,1 and 2 for $\Lambda_1$, $\Lambda_2$ and $\Lambda_3$ results in the following matrix equation:

$$\begin{bmatrix} 0 & 0 & 1 \\ 1 & 1 & 1 \\ 4 & 2 & 1 \end{bmatrix} \begin{bmatrix} a \\ b \\ c \end{bmatrix} = \begin{bmatrix} R_1 \\ R_2 \\ R_3 \end{bmatrix}.$$

Inverting the three by three matrix gives the solution for *a, b,* and *c*. The solution is found from:

$$\begin{bmatrix} \tfrac{1}{2} & -1 & \tfrac{1}{2} \\ -\tfrac{3}{2} & 2 & -\tfrac{1}{2} \\ 1 & 0 & 0 \end{bmatrix} \begin{bmatrix} R_1 \\ R_2 \\ R_3 \end{bmatrix} = \begin{bmatrix} a \\ b \\ c \end{bmatrix}$$

The peak of the parabola is at the turning point, found by consideration of the first derivative of the parabolic equation, and given by:

$$t_p = -b/2a$$

Substituting for *b* and *a* gives:

$$t_p = \frac{3R_1 - 4R_2 + R_3}{R_1 - 2R_2 + R_3}$$

The algorithm circuitry then calculates the timing difference between the determined value $t_p$ and the first sample value $\Lambda_1$ to give the calculated fractional timing error.

While other similar formulae may be derived by using sample locations $R_2$ and $R_3$ as the reference point, the above formula is used for example purposes.

In this example the integer offset used on lines 13 corresponds to the location of the maximum value of the averaged squared cross-correlation, i.e. $\Lambda_2$, whereas the fractional part is relative to $\Lambda_1$. Hence in this case the estimate tp must be adjusted by the subtraction of a sampling period. Alternatively, the above equation may be formulated using $\Lambda_2$, as the reference point rather than $\Lambda_1$ as used in the above derivation.

This timing error is calculated for each of the peaks of the averaged squared cross-correlation function, only one of which is shown in Figure 3(a), thus generating N fractional error timing estimates associated with each of the N multi-paths. This timing error information is then generated on each of the signal lines 12a to 12N and sent to the respective multi-path interpolators 6a to $6_N$.

It should be noted that the peak location $t_p$ is still an estimate: it is based on the assumption that each of the peaks of the average squared correlation function has a parabola shape. However, it gives a much more accurate estimate than the peak sample value.

The respective interpolators 6a to $6_N$ use the timing error information provided on lines 12a to $12_N$ to shift the signal on line 2 by the appropriate amount (either forward or backward) prior to input to one of the fingers of the rake receiver.

Thus the timing error estimation circuitry 4 in combination with the multi-path interpolators 6a to $6_N$ provide fractional sample timing corrections. The timing corrections are employed in a feed-forwards basis as shown in Figure 1. In this structure the fractional timings are passed to respective interpolators which produce an output corrected by the fractional sample error.

In the above description the inventive technique has been described with reference to an example of non-coherent system. However, the invention is more generally applicable, and one skilled in the art will appreciate that the invention is not limited to such a system. In an alternative implementation described hereinafter, the technique of the present invention is described applied by way of further example in a preferred implementation of a coherent system.

In a coherent system, known data (e.g. preamble or pilot data symbols) is used which provides improved performance (lower timing offset estimate variance). In the coherent system, instead of calculating the squared magnitudes of the cross-correlation values of the received signal as described in the above example, the complex product of the cross-correlation values and the complex conjugate of the known data symbols of the received signal is calculated.

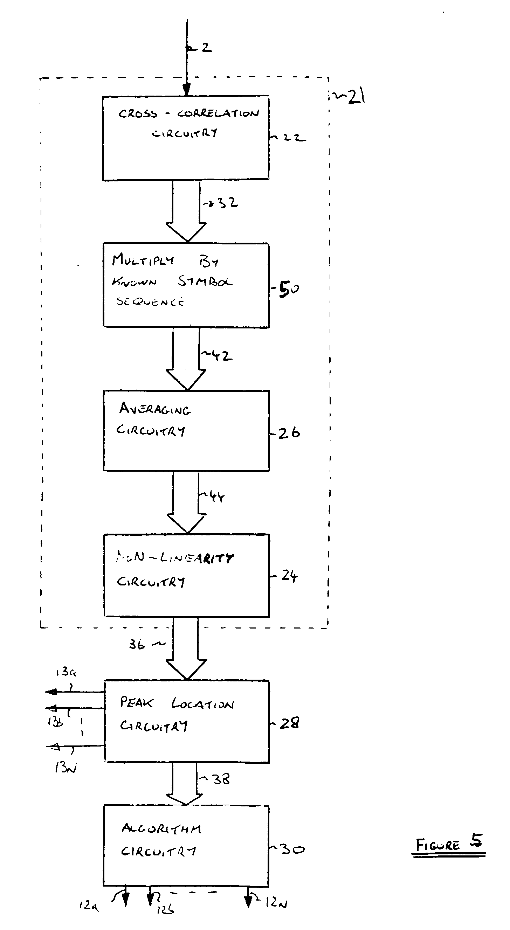

For completeness, referring to Figure 5, the main elements of the implementation of the timing error estimation circuitry 4 for a coherent system are shown. Like reference numerals are used to indicate elements which are the same as those shown in Figure 2. The only difference is in the functional block 21, where an additional block for multiplying by a known symbol sequence 50 is included. In addition the averaging circuitry and non-linearity circuitry 24 swap positions. The multiplying operation in block 50 is a complex multiplication step.

In the above-described example, two particular implementations of the invention for coherent and non-coherent detection are described. One skilled in the art will appreciate that variations may be made to the described implementations without departing from the scope of the invention.

In the preferred implementation, where the peak estimation is based on the fitting of the detected points to the equation of the above-stated parabola, a sample rate of four samples per chip is required at the input of the peak location circuitry 28. However, in a preferred implementation, the received signal on line 2 has a sample rate of only two samples per chip. In such a scenario, prior to the cross-correlation circuitry 22 an interpolation stage may be introduced such that the signal on line 2 is interpolated by a factor of 2 to provide a signal to the cross-correlation circuitry 22 having a sample rate of four samples per chip.

Alternatively, such interpolator having an interpolation factor of 2 may be introduced after the cross-correlation circuitry 22. This is advantageous, since it enables the cross-correlation circuitry 22, which is preferably implemented using a code-matched filter, to be half the size it would be if the interpolation was performed at its input.

In a coherent system, the interpolation by a factor of two could be implemented at any point prior to the peak location circuitry 28, since the process is linear throughout. In a non-coherent system, the interpolation by a factor of two must be implemented prior to the non-linearity circuitry 24.

In addition, although hereinabove a particular set of equations is described for approximating a curve to the three detected sample points, other variations may exist. Any technique for approximating a curve to a set of points may be used, and then formula for detecting the peak of that curve applied.

**Claims**

1. A method of estimating the timing error of a received signal in a spread spectrum communication system comprising: cross-correlating a portion of the received signal with a known sequence thereby generating a sampled cross-correlation function; determining the sample having the highest value of the sampled cross-correlation function; and estimating the timing position of the actual peak of the cross-correlation function based on the sample point peak value of the sampled cross-correlation function and the values of the cross-correlation function at sample points before and after the sample generating the peak value.

2. The method of claim 1 wherein the timing position of the actual peak is approximated by fitting a curve to said sample points.

3. The method of claim 1 or claim 2 wherein the sample points before and after the sample generating the peak value are those immediately adjacent the peak value.

4. The method of claim 2 or claim 3 wherein said curve is a quadratic curve.

5. The method of any one of claims 1 to 4, wherein the step of estimating the timing position of the actual peak involves applying the formula:

$$t_p = \frac{3R_1 - 4R_2 + R_3}{R_1 - 2R_2 + R_3}$$

where $t_p$ = the estimated timing position of the peak, $R_1$ = the correlation value at one sample less than the peak , $R_2$ = the correlation value at the peak, and $R_3$ =the correlation value at one sample more than the peak.

6. The method of any one of claims 1 to 5 further comprising the step of adjusting the timing position of the received signal in dependence on said estimated timing position.

7. The method of claim 6 wherein the timing errors of a plurality of multi-paths of a received signal are estimated, and a plurality of timing position adjusted received signals are provided to a respective plurality of rake fingers, each rake finger being associated with one of the respective plurality of multi-paths.

8. The method of any one of claims 1 to 7 in which the cross-correlation function is averaged for a sequence of received signal portions.

9. The method of any one of claims 1 to 8 in a non-coherent system, further comprising the step of applying a non-linearity function to the cross-correlation values.

10. The method of any one of claims 1 to 8 in a coherent system, further comprising the step of multiplying the cross-correlation values with a known complex sequence.

11. The method of any one of claims 1 to 10, wherein the cross-correlating step comprises generating a continuous cross-correlation function, and sampling the continuous cross-correlation function to generate the sampled cross-correlation function.

12. A method of recovering a transmitted symbol in a received signal in the receiver of a spread-spectrum system including the steps of estimating the timing error of the received signal according to any one of claims 1 to 11, adjusting the timing position of the received signal in accordance with the determined error and de-spreading the time-adjusted received signal.

13. In a receiver of a spread spectrum communication system, circuitry for estimating the timing error of a received signal, including: cross-correlation circuitry connected to input the received signal and a stored known spreading sequence, and for generating a sampled cross-correlation function peak detection circuitry, connected to input the sampled cross-correlation function, for determining the sample having the highest correlation value; and timing estimation circuitry, connected to the cross-correlation circuitry and the peak detection circuitry, for estimating the timing position of the actual peak of the cross-correlation function based on the sample point peak value of the sampled cross-correlation function and the values of the cross-correlation function at sample points before and after the sample generating the peak value.

14. The circuitry of claim 13 wherein the timing estimation circuitry estimates the position of the actual peak by fitting a curve to said sample points.

15. The circuitry of claim 13 or claim 14 wherein the sample points before and after the sample generating the peak value are those immediately adjacent the peak value.

16. The circuitry of claim 14 or 15 wherein said curve is a quadratic curve.

17. The circuitry of any one of claims 13 to 16, wherein the timing estimation circuitry applies the formula:

$$t_p = \frac{3R_1 - 4R_2 + R_3}{R_1 - 2R_2 + R_3}$$

where $t_p$ = the estimated timing position of the peak, $R_1$ = the correlation value at one sample less than the peak , $R_2$ = the correlation value at the peak, and $R_3$ = the correlation value at one sample more than the peak.

18. The circuitry of any one of claims 13 to 17 further comprising timing adjustment circuitry connected to receive the received signal and to adjust the timing position thereof responsive to the estimated timing position of the actual peak.

TIMING
ERROR
ESTIMATION
CIRCUITRY

MULTIPATH 1
INTERPOLATOR

MULTIPATH 2
INTERPOLATOR

MULTIPATH N
INTERPOLATOR

MULTIPATH 1
DESPREADING
CIRCUITRY

MULTIPATH 2
DESPREADING
CIRCUITRY

MULTIPATH N
DESPREADING
CIRCUITRY

COMBINER

EP 1 089 452 A1

FIGURE 1

FIGURE 2

FIGURE 3

Amplitude

MP1　　MP2　　MP3

Timing Position

FIGURE 4

FIGURE 5

European Patent Office

## EUROPEAN SEARCH REPORT

**Application Number**

EP 99 30 7636

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 932 263 A (NOKIA MOBILE PHONES LTD) 28 July 1999 (1999-07-28) | 1-7,9-18 | H04B1/707 |
| A | * page 3, line 23 - line 32 *<br>* page 4, line 1 - line 7 *<br>* page 6, line 47 - page 7, line 24 *<br>* claims 1,3-6 * | 8 | |
| X | EP 0 933 882 A (RICOH KK) 4 August 1999 (1999-08-04)<br>* page 2, line 5 - line 10 *<br>* page 4, line 4 - line 8 *<br>* page 4, line 32 - line 34 *<br>* page 6, line 20 - line 39 *<br>* page 13, line 39 - page 14, line 17 *<br>* figures 9,12,20 * | 1-6,9-18 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 25 February 2000 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 089 452 A1

**ANNEX TO THE EUROPEAN SEARCH REPORT
ON EUROPEAN PATENT APPLICATION NO.**                    EP 99 30 7636

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2000

| Patent document cited in search report | | Publication date | Patent family member(s) | | Publication date |
|---|---|---|---|---|---|
| EP 0932263 | A | 28-07-1999 | JP | 11261528 A | 24-09-1999 |
| EP 0933882 | A | 04-08-1999 | JP | 11284601 A | 15-10-1999 |

EPO FORM P0459

For more details about this annex : see Official Journal of the European Patent Office, No. 12/82

15